# EUROPEAN PATENT APPLICATION

(11) **EP 4 425 444 A1**
(43) Date of publication of application: **04.09.2024**
(21) Application number: 23159608.1
(22) Date of filing: 02.03.2023
(51) Int. Cl.: G06V 10/82

(54) **COMPUTER-IMPLEMENTED METHOD FOR THE DETECTION OF ADHESIVE MATERIAL ON A SUBSTRATE**

(71) Applicant: Ero S.r.l., 25010 Montirone (BS) (IT); Made S.C.A R.L., 20133 Milano (MI) (IT); Universita' degli studi di Brescia, 25121 Brescia (IT)
(72) Inventor: GIUSTOLISI, Riccardo, 25010 Montirone (IT); PORCARI, Giacomo, 25010 Montirone (IT); SERINA, Ivan, 25121 BRESCIA (IT); GEREVINI, Alfonso Emilio, 25121 BRESCIA (IT)
(74) Representative: Luppi, Emanuele

(57) **Abstract**

The computer-implemented method for the detection of adhesive material on a substrate comprises the following steps:
- step of acquisition of at least one image of a substrate subjected to a distribution process of adhesive material;
- step of image processing carried out by means of at least one neural network to generate at least one representative parameter of the distribution of the adhesive material on the substrate;
- step of comparing the representative parameter with a corresponding predefined reference value to generate a compliance data of the distribution of adhesive material.

## Description

### Technical Field

The present invention relates to a computer-implemented method for the detection of adhesive material on a substrate.

### Background Art

In the paperboard and packaging industry, the presence of quality control to monitor the position and distribution of adhesive material is increasingly considered an enabling technology. It is therefore necessary for companies operating in the sector to provide themselves with tools which are able to guarantee the quality and homogeneity of the batches produced.

Generally, the adhesive material is distributed onto a substrate through special dispensers.

Once the distribution of the adhesive material has been made, the implementation of control methods is known in order to ensure proper distribution of the adhesive material and consequently optimal sealing of the bonded surfaces.

A first known method involves the use of sensors, such as capacitive or infrared sensors. This method is conveniently applicable to any type of substrate, whether it has graphic decorations or not.

The sensors, however, do not allow for effective detection of the conformation of the adhesive material application and/or the homogeneity thereof. In particular, the sensors do not allow for the optimal detection of "splashing" phenomena, i.e., application of adhesive material which extends from a predefined distribution trajectory.

In addition, the sensors need to be calibrated depending on the type of adhesive material used, which may vary according to the customer but also depending on the type of substrate to be bonded. It follows that with each variation in the type of adhesive material, this method requires additional calibration steps of the aforementioned sensors.

Still, the use of sensors makes it considerably complex to detect adhesive material in places not intended to receive the same.

Finally, the sensors do not allow for appreciating in a timely manner the reason for any nonconformities, still requiring a final check by an operator.

In order to solve at least part of the above drawbacks, a second known method involves the use of vision systems.

Vision systems enable monitoring of a large area, thus reducing the time required, and make it easy to detect the presence of adhesive material in places not intended to receive the same.

In addition, vision systems make it possible to detect even slight variations in the distribution of the adhesive material; in fact, it is also possible to check whether the glue is distributed in the right amount while avoiding excess adhesive.

However, the method with vision systems is more affected by the graphic and structural characteristics of the substrate. In fact, the presence of areas with lettering/designs, embossing to increase glue penetration (and thus bond strength), three-dimensional decorations (reliefs or recesses), reflective surfaces, etc. can result in incorrect or inaccurate detections.

In addition to this, the adhesive material itself can also generate reflection areas that make the relevant detection complex. Indeed, it should be specified that the adhesive material normally used in such applications is of the type of white or colorless glue and provided with an inherent glossiness given by the liquid components of the same.

Therefore, the method with vision systems requires specific lighting conditions which may vary depending on the substrate and/or adhesive material. Nevertheless, the method with vision systems may itself require additional visual inspection by an operator.

For this reason, the use is well known of additives, of the type of fluorescent or ultraviolet-sensitive substances, to be added to the adhesive material in order to make it stand out more from the surface of the substrate.

However, even such a solution does not fully solve the drawbacks associated with this method. The use of additives, in addition to increasing the costs related to such operations, is not always compatible with the type of application for which the substrate is intended, e.g., in the food sector the use of such additives is not allowed due to possible migration of chemical components from the packaging to the product.

Through the methods of known type, therefore, it is very difficult to analyze any type of substrate without incurring in errors.

### Description of the Invention

The main aim of the present invention is to devise a computer-implemented method for the detection of adhesive material on a substrate which can effectively detect any nonconformity in the distribution of the adhesive material on any type of substrate.

Another object of the present invention is to devise a computer-implemented method for the detection of adhesive material on a substrate which allows the detection of any type of adhesive material and does not require the use of specific additives.

A further object of the present invention is to devise a computer-implemented method for the detection of adhesive material on a substrate which ensures correct detection and does not require any additional visual inspection by an operator.

Another object of the present invention is to devise a computer-implemented method for the detection of adhesive material on a substrate which allows the aforementioned drawbacks of the prior art to be overcome within the framework of a simple, rational, easy and effective to use as well as affordable solution. The aforementioned objects are achieved by the present computer-implemented method for the detection of adhesive material on a substrate having the characteristics of claim 1.

### Brief Description of the Drawings

Other characteristics and advantages of the present invention will become more apparent from the description of a preferred, but not exclusive, embodiment of a computer-implemented method for the detection of adhesive material on a substrate.

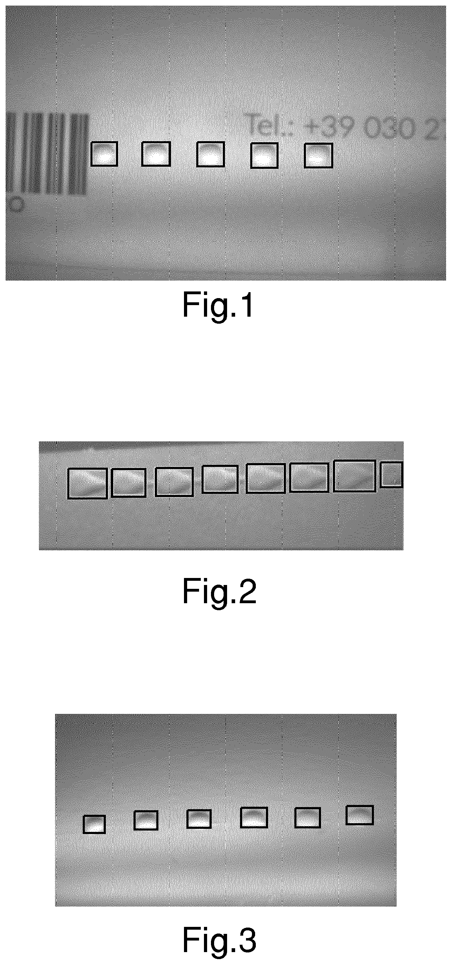

In the attached tables of drawings, Figures 1-3 show examples of detection of adhesive material on substrates having three-dimensional decorations and/or graphic decorations in accordance with the method according to the invention.

### Embodiments of the Invention

The method according to the invention is implemented using a computer.

The method comprises the following steps:
- step of acquisition of at least one image of a substrate subjected to a distribution process of an adhesive material;
- step of image processing carried out by means of at least one neural network to generate at least one representative parameter of the distribution of the adhesive material on the substrate;
- step of comparing the representative parameter with a corresponding predefined reference value to generate a compliance data of the distribution of adhesive material.

In the context of the present disclosure, the substrate is substantially planar. The substrate is preferably made of paperboard material. For example, the substrate is of the type of a paperboard or cardboard sheet. It cannot however be ruled out that the present method may be also applicable to substrates that are not planar and/or made of different materials, e.g., plastic material, wood, leather.

The adhesive material is preferably of the type of a glue. Specifically, the adhesive material is white or colorless. For example, the adhesive material is selected from vinyl glue, starch-based glue, hot-melt glue or the like. In addition, the adhesive material has a predefined viscosity and, once distributed, defines a relief on the substrate.

The adhesive material can be distributed in a linear manner, to define a continuous strip of adhesive material, or pointwise, to define a single bonding point or a discontinuous row of bonding points.

The step of acquisition is carried out using known acquisition means, which will not be described in detail in this disclosure, and which are operationally connected to the computer. For example, the acquisition means may comprise cameras and/or video cameras commonly used in this type of application.

The acquisition means are configured to acquire an image of the substrate after the latter has been subjected to a distribution process of adhesive material. For this purpose, the computer comprises a memory unit configured to store at least the image of the substrate.

Conveniently, the image is acquired in grayscale shading. The acquisition means, in fact, are configured to acquire the image in grayscale so as to reduce the timing related to this operation.

Alternatively, the image can be acquired in color.

The step of processing, carried out using the neural network, allows a representative parameter of the distribution of the adhesive material to be generated from the acquired image.

The representative parameter is selected from the list comprising: presence of adhesive material on the substrate, position of the adhesive material on the substrate, amount of adhesive material distributed, uniformity of distribution of the adhesive material, conformation of the adhesive material distributed.

In practice, the step of processing makes it possible to determine the characteristics of the adhesive material once it is distributed on the substrate. Advantageously, the neural network is of the multi-layer type.

The number of layers in a neural network represents the number of operations which are performed on the data provided; the more complex the task being performed, the more operations on the data are required and, consequently, more layers are needed. The layers may be the same or different from each other and may have different purposes depending on the complexity of the task.

The use of a multi-layer neural network enables the development of a "deep learning" type methodology, that is, one in which the neural network acquires and processes a large number of images so as to provide extremely reliable output.

Prior to the step of acquisition, the method comprises a step of lighting of the substrate.

The step of lighting is carried out by means of at least one light beam incident the substrate with an angle of incidence other than 90°.

Specifically, the angle of incidence is comprised between 0° and 180° but other than 90°. When the angle of incidence is 90°, in fact, the lighting generates reflection areas or otherwise low-contrast areas that prevent the adhesive material to be distinguished from the substrate. This occurrence is even more evident in the case of a white background. A minimal inclination of the light beam, on the other hand, makes it possible to avoid the occurrence of this problem.

In addition to this, the lighting of the adhesive material with a light beam which is not orthogonal to the substrate results in the formation of a shadow area that can further facilitate the distinction of the adhesive material from the substrate itself.

The light beam is appropriately positioned and calibrated prior to the step of acquisition in order to optimize the visibility of the adhesive material on the substrate.

The step of processing allows processing a mapping of the adhesive material on the substrate and allows determining at least one of the aforementioned parameters. Specifically, the step of processing allows for the detection of the presence of the adhesive material on the substrate and the relevant position thereon and/or with respect to other bonding points.

During the next step of comparison, the aforementioned representative parameters are then compared with the reference values to check the correspondence thereof and to generate the compliance data of the distribution of adhesive material.

The step of comparison is appropriately carried out by means of a special comparison software installed on the computer.

In accordance with the invention, the substrate may comprise at least one three-dimensional decoration and/or at least one graphic decoration. In detail, the expression "three-dimensional decoration" refers to the fact that the surface of the substrate may not be perfectly flat, i.e., it may have an embossing, generally used to increase the penetration of the adhesive material (and thus the bonding strength) or an actual decorative pattern in the form of reliefs and/or recesses.

The expression "graphic decoration", on the other hand, refers to the printing of designs and/or lettering but also to special surface effects of the substrate such as a glossy, iridescent surface or the like.

Conveniently, prior to the step of detection, the method comprises a step of recognizing the adhesive material in the image with respect to at least one decoration.

In fact, as shown in the figures, the neural network can effectively distinguish the adhesive material from the decorations on the substrate.

To achieve this result, the neural network is "trained" so that it can provide the most reliable results possible.

For this purpose, the method also comprises a step of training of the neural network. The step of training is carried out by processing the images selected from the list comprising: images of substrates without adhesive material, images of substrates with adhesive material distribution that does not conform to said reference parameters, images of substrates defining reflection areas with said light beam, images of substrates provided with three-dimensional decorations and/or graphic decorations.

In addition, it should be specified that the adhesive material is provided with an inherent glossiness given by the liquid components and, therefore, the step of lighting may result in the formation of reflection areas on the adhesive material itself.

The neural network is also appropriately trained to recognize the adhesive material in the case of reflection areas on the adhesive material itself. Therefore, the step of training also involves processing images of substrates having a reflection area in the adhesive material distributed.

It has in practice been ascertained that the described invention achieves the intended objects, and in particular, the fact is emphasized that the present computer-implemented method for the detection of adhesive material on a substrate enables the effective detection of any non-conformity in the distribution of the adhesive material on any type of substrate. In fact, the use of a neural network always allows the distinction of adhesive material from the decorative effects of the substrate and enables effective and reliable detection.

In addition, the method according to the invention allows the detection of any type of adhesive material and does not require the use of specific additives. The neural network enables the recognition of the adhesive material even in cases where lighting may generate reflection areas on the adhesive material itself. Finally, this method ensures correct detection which does not require additional visual inspection by an operator.

## Claims

1. Computer-implemented method for the detection of adhesive material on a substrate, said method being **characterized by** the fact that it comprises the following steps:
- step of acquisition of at least one image of a substrate subjected to a distribution process of adhesive material;
- step of image processing carried out by means of at least one neural network to generate at least one representative parameter of the distribution of said adhesive material on said substrate;
- step of comparing said representative parameter with a corresponding predefined reference value to generate a compliance data of said distribution of adhesive material.

2. Method according to claim 1, **characterized by** the fact that said representative parameter is selected from the list comprising: presence of said adhesive material on said substrate, position of said adhesive material on said substrate, amount of adhesive material distributed, uniformity of the distribution of the adhesive material, conformation of the adhesive material distributed.

3. Method according to one or more of the preceding claims, **characterized by** the fact that, prior to said step of acquisition, said method comprises a step of lighting of said substrate carried out by means of at least one light beam incident said substrate with an angle of incidence other than 90°.

4. Method according to one or more of the preceding claims, **characterized by** the fact that said substrate comprises at least one three-dimensional decoration and/or at least one graphic decoration and by the fact that, prior to said step of detection, said method comprises a step of recognizing said adhesive material in said image with respect to said at least one decoration.

5. Method according to one or more of the preceding claims, **characterized by** the fact that it comprises a step of training of said neural network carried out by processing images selected from the list comprising: images of substrates without adhesive material, images of substrates with adhesive material distribution that does not conform to said reference parameters, images of substrates defining reflection areas with said light beam, images of substrates provided with three-dimensional decorations and/or graphic decorations.

6. Method according to one or more of the preceding claims, **characterized by** the fact that said neural network is of the multi-layered type.

7. Method according to one or more of the preceding claims, **characterized by** the fact that said image is acquired in grayscale shading.

8. Method according to one or more of the preceding claims, **characterized by** the fact that said adhesive material is distributed in a linear manner or pointwise.

9. Method according to one or more of the preceding claims, **characterized by** the fact that said substrate is made of paperboard material.

10. Method according to one or more of the preceding claims, **characterized by** the fact that said substrate is substantially planar.

11. Method according to one or more of the preceding claims, **characterized by** the fact that said adhesive material is of the type of a glue.
